Europäisches Patentamt

European Patent Office

Office européen des brevets

(19)

(11) Publication number: **0 254 974 B1**

# EUROPEAN PATENT SPECIFICATION

(12)

(45) Date of publication of patent specification: **15.05.91**   (51) Int. Cl.5: **B62D 61/04**

(21) Application number: **87110270.3**

(22) Date of filing: **16.07.87**

(54) **Rhomboidal geometry of an automotive vehicle.**

<table>
<tr><td>

(30) Priority: **30.07.86 IT 1670886**

(43) Date of publication of application:
**03.02.88 Bulletin 88/05**

(45) Publication of the grant of the patent:
**15.05.91 Bulletin 91/20**

(84) Designated Contracting States:
**AT BE CH DE ES FR GB GR LI LU NL SE**

(56) References cited:
**FR-A- 573 653**
**FR-A- 927 521**
**FR-A- 1 378 894**
**US-A- 2 548 749**
**US-A- 2 592 893**

</td><td>

(73) Proprietor: **Marino, Silvio**
**Via Debbio no. 108**
**I-19020 Bolano (SP)(IT)**

(72) Inventor: **Marino, Silvio**
**Via Debbio no. 108**
**I-19020 Bolano (SP)(IT)**

(74) Representative: **Ferrarotti, Giovanni**
**Studio Consulenza Tecnica Dr. Ing. Giovanni**
**Ferrarotti Via Alla Porta Degli Archi 1/7**
**I-16121 Genova(IT)**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Four-wheeled automotive vehicles in which the wheels are forming a square angled quadrilateral at the end of the two, front and rear, wheel axles and which usually are provided with front steering wheels, are generally known.

This solution, in which the four wheels have a quadrilateral configuration, has reached its optimization as far as performance is concerned and no further significate improvements or better roadability can be achieved.

This invention has the aim to obtain a considerable progress by positioning the four wheels in a rhomboidal configuration. This configuration enormously increases the roadability of these cars especially in the curves, since in a quadrilateral configuration, the car is only acting on the two external wheels whilst in a rhomboidal wheel configuration, road resistance is supported at least by three wheels.

An automotive vehicle having a rhomboidal wheel configuration was already proposed as far back as 1913, but results were unsatisfactory because of numerous drawbacks. First of all, the center of gravity of the vehicle was not centralized so that differentiated forces were acting on the wheels. A second disadvantage was that only the front wheel was steering, which easily led to skidding in curves also involving strong wear of the tyres.

Then there was the fact that only the central wheels were driving, since at that time integral four-wheels drive for private and race cars was still quite unknown. A similar car was introduced in 1960, but with its wheels in Y-configuration.

It is also known from FR-A-1 378 894 a vehicle with rhomboidal configuration, which foresees a chassis formed in single element. But in this solution the shaftings of the central transversal wheels are considerable displaced towards the anterior part of the vehicle and these wheels are suspended by arms oscillating on transversal axis. In consequence the positioning of the wheels is not exactly rhomboidal.

Besides the vehicle of FR-A-1 378 894 presents as driving wheels only the central wheels, whilst the front and rear wheels are steerable but not driving wheels and they present a suspension with L-shaped floating arms. In consequence in this solution is not indispensable the centralization of the engine, whilst this centralization is necessary when the front and rear wheels are driving wheels.

It is also known from FR-A-573 653 a rhomboidal vehicle which presents the front wheel steerable and driving, the rear wheel only steerable and the lateral wheels with stabilizing function. It is evident that in this solution the power of a wheel results limited as limited is the stability of the vehicle.

From FR-A-927 521 it is known a vehicle with rhomboidal configuration, in which the front and rear wheels are steerable and the central wheels are driving wheels. Besides US-A-2 592 893 treats only of the suspension means of the wheels and US-A-2 548 749 foresees a rhomboidal not driving vehicle for children.

These cars too had no further develoment since they have almost the same disadvantages as their ancestors.

The automotive vehicle according to this Invention practically eliminates all above mentioned drawbacks while offering several structural and functional advantages thus making the adoption of the rhornboidal wheel configuration highly attractive.

Generally speaking, the automotive vehicle subject matter of this Invention has the following characteristics:

- the single frame or chassis has a perfectly rhomboidal configuration,
- the engine is positioned so that the center of gravity of the car is located in the central part of the chassis;
- all wheels are driving wheels, the front and rear wheel suspensions bearing transmission mechanisms and a driving shaft,
- the suspensions for the central wheels are self-aligning trapezoidal suspensions,
- the front and rear wheels are steered by means of levers secured to said front and rear wheels, said levers being actuated by a single gear box through two rods.

These technical particulars and others which will be described herein-after, will make these automotive vehicles with rhomboidal wheel configuration perfectly efficient and competitive as compared with other cars having a rectangular wheel configuration.

The invention in question is illustrated, in its practical implementation, in the attached drawings in which:

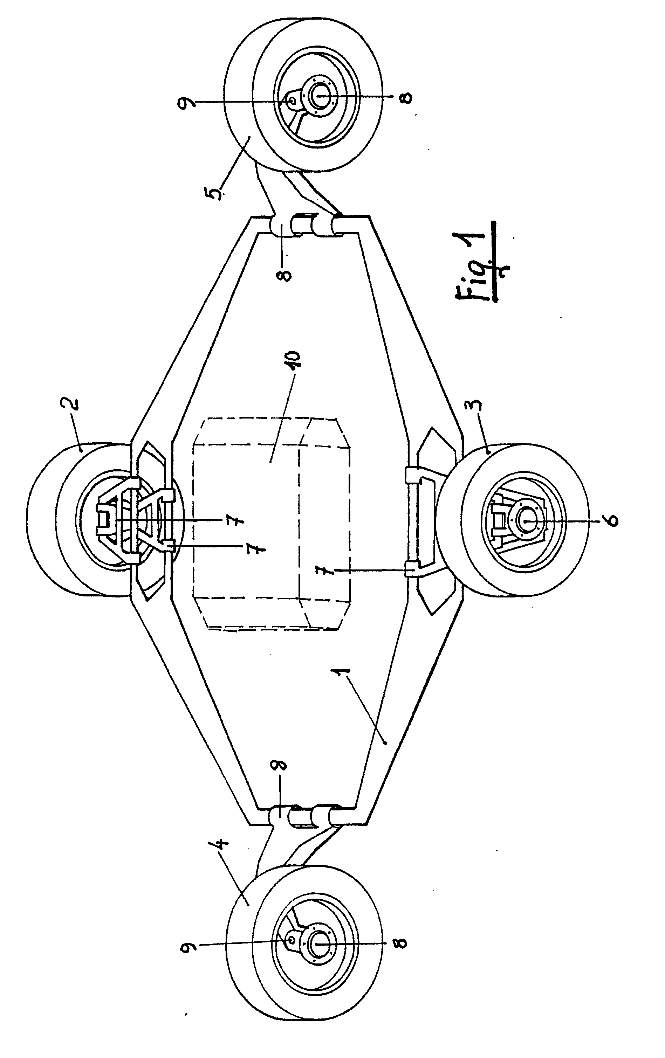

Fig. 1 shows a perspective view of the bearing frame or chassis and of the wheels mounted in rhomboidal configuration;

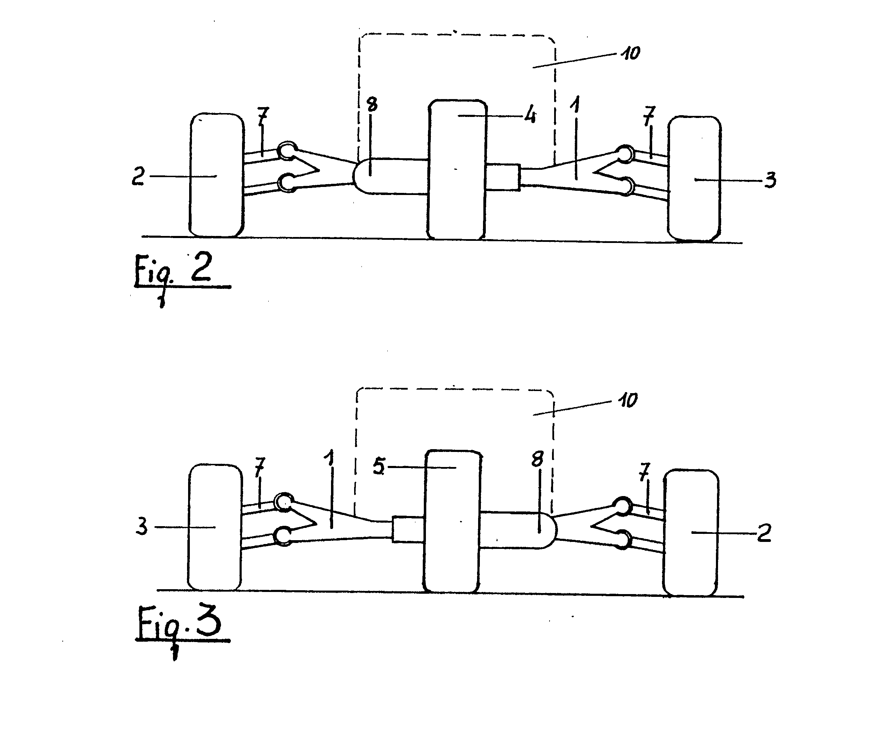

Fig. 2 and 3 are respectiively showing a front and rear view of the assembly illustrated in Fig. 1;

Fig. 4 and 5 are illustrating the steering gear acting simultaneously on the front and rear wheels.

Fig. 6 shows a perspective view of the steering gear housing;

Fig. 7 shows a perspective view of the L-shaped floating arm of the castoring wheels;

Fig. 8 shows a side view of the fastening and steering mechanisms of a steering wheel.

With reference to these illustrations, the bearing frame or chassis 1 has a rhomboid configuration, on which the central wheels 2 and 3 as well as the front and rear steering wheels 4 and 5 are mounted. The central wheels 2 and 3 are supported along a center axis 6 by self-aligning trapezoidal suspensions 7, whereas the front 4 and rear 5 wheel are supported along a horizontal axis by L-shaped floating arm type suspensions fitted with a vertical pin 9 providing for steering of the wheels 4 and 5. The engine 10 is located in the central part of the chassis so that the center of gravity is located as centrically as possible with respect to the rhombus formed by the chassis and by the wheels 2, 3, 4 and 5.

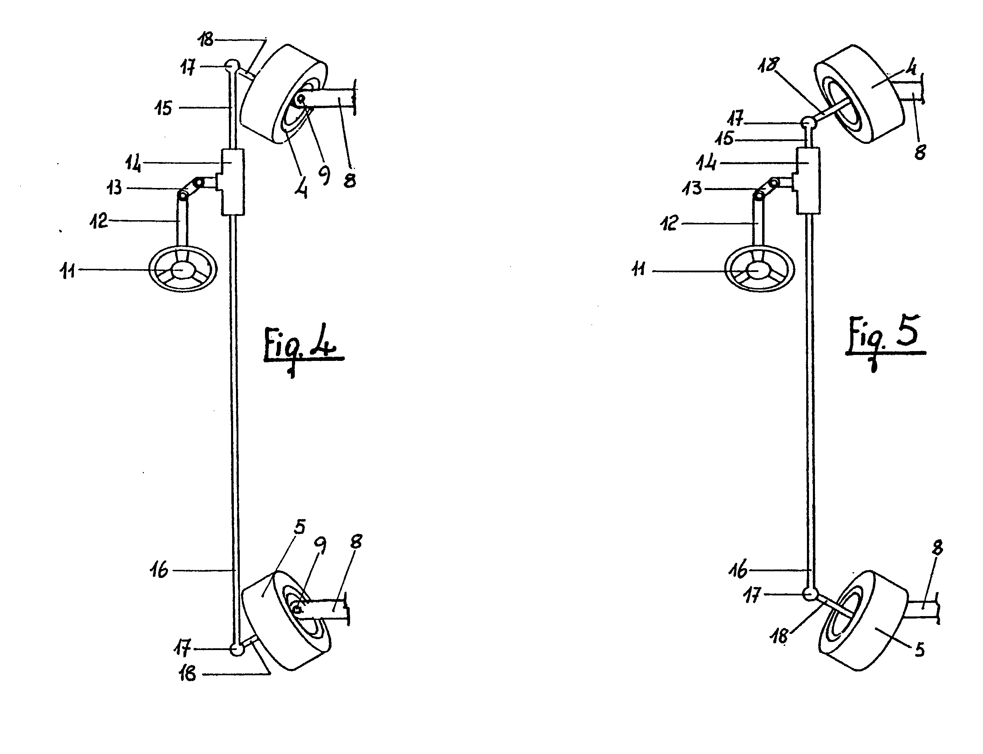

The figures 4 and 5 show that both front 4 and rear wheels 5 are steerable in opposite directions.

When acting on the steering wheel 11, the steering box is controlled through the steering column 12 and the double joint 13, while the steering box is acting at the same time on the wheels through the rods 15 and 16 connected by their ball joints 17.

These ball and socket joints 17 are linked up to the outer end of a rotating rod 18, fastened on the outside of the wheel in opposite position with respect to the steering pin 9.

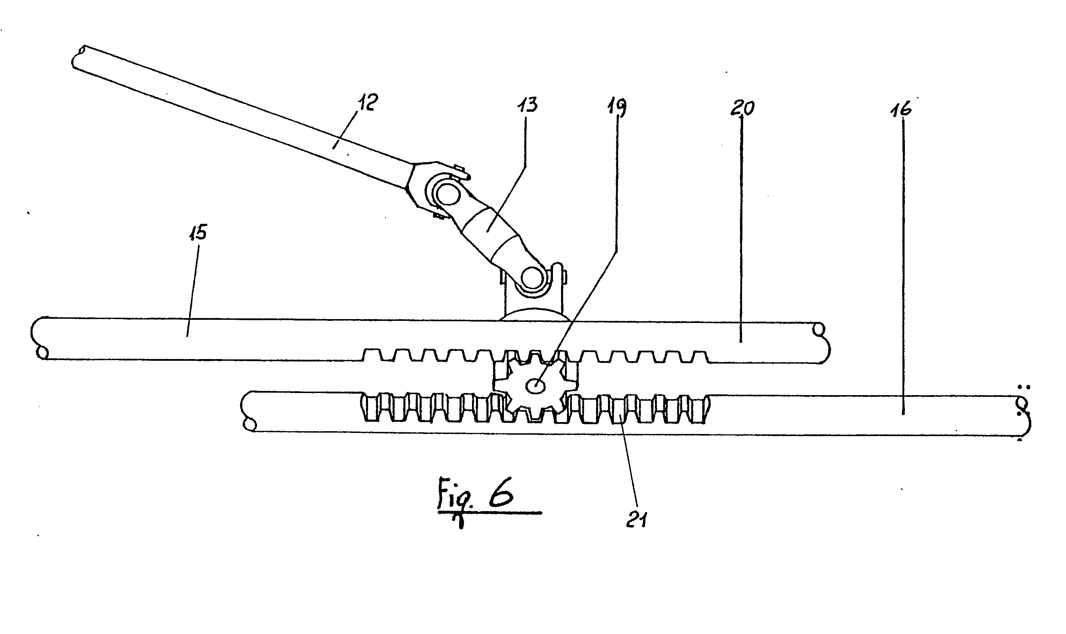

The figures 4 and 5 respectively show the left and right steering. The steering box 14 also houses a pinion 19 and two opposed reacks 20, 21 respectively connected to the steering control rods 15 and 16 as shown in Fig. 6. The pinion 19 is driven by the steering wheel 11, by means of the steering column 12 and the double joint 13.

This solution permits at the same time steering of both wheels in opposite directions around the pins 9.

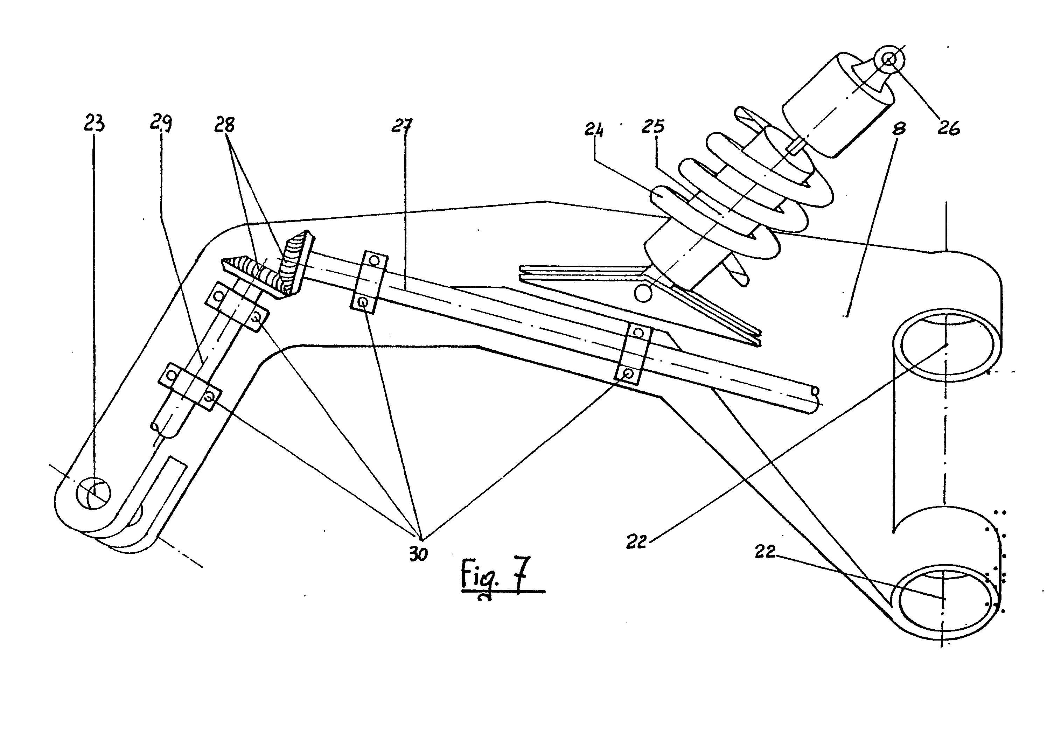

The floating arm 8 of the steering wheels 4 and 5 is shown in greater detail in Fig. 7. This floating arm 8 is L-shaped and has at one end articulation eyelets with horizontal axis hinged on the chassis 1 and on its other end holes 23 with vertical axis in which to accomodate the steering pin 9.

Any and all movements of this floating arm due to uneveness of the road are compensated by a large-sized spring and damper 25, located between the arm 8 and a fixed point 26 of the bearing frame or chassis.

The mechanical transmission systems 27, 28, 29 are mounted on bearings 30 and they transmit the drive from the engine to the steering wheels 4 and 5.

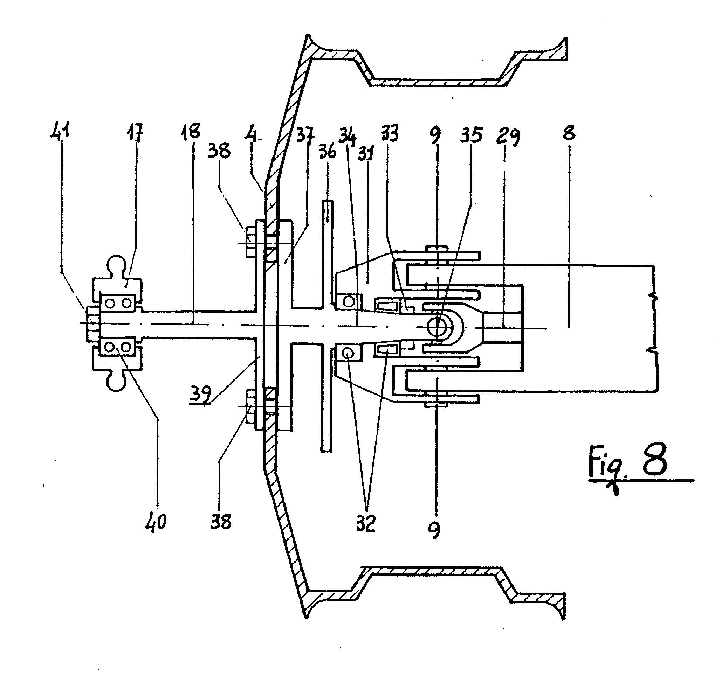

Fig. 8 shows the arrangement of the steering wheels 4, 5 on their supporting floating arm 8. A support 31 is linked up to this floating arm 8 by means of two knuckle joints 9, usually secured by two pins. This support 31 of the driving shaft 34, complete with bearings 32 and register 33, is actuated over a universal joint 35, by the driving shaft 29. A brake disk 36 and a flange 37 fastened with boits 38 on to the wheel rim 4 are mounted on the revolging shaft 34. A second flange 39 is secured with the same bolts 38 on the outer surface of the rim. This second flange 39 is bearing a steering rod 18, one end of which is fitted whith a-usually double-ball joint 17, complete with bearing 40, kept in place by a bolt 41. This bearing 40 permits to connect the revolving rod 18 to the non rotating steering rods 15, 16.

The system described in this invention can also be suitably applied to toys and in particular to model cars, now used to reproduce on small scale the construction particulars and functions of series built automotive vehicles and race cars.

## Claims

1. Automotive vehicle with rhomboidal configuration, in which the wheels (2,3,4,5) are arranged according to a rhombus, with two central wheels (2, 3), one front,, wheel (4) and one rear wheel (5), and which presents a single frame or chassis (1), front (4) and rear (5) wheels suspensions (8) with L-shaped floating arms, the front (4) and rear (5) wheels being steerably mounted on the suspensions (8) by vertical pins (9), characterized by the combination of the following features:
   - the single frame or chassis (1) has a perfectly rhomboidal configuration,
   - the engine (10) is positioned so that the center of gravity of the car is located in the central part of the chassis;
   - all wheels (2,3,4,5) are driving wheels, the front and rear wheel suspensions bearing transmission mechanisms (27,28,29) and a driving shaft (34),
   - the suspensions (7) for the central wheels are self-aligning trapezoidal suspensions,
   - the front (4) and rear (5) wheels are steered by means of levers (18) secured to said front and rear wheels, said levers (18) being actuated by a single steering box (14) through two rods (15,16).

2. Automotive vehicle as described in claim 1 characterized by the fact that the steering box (14) has a pinion (19) driven by the steering wheel (11) by means of the steering column (11) and the double joint (13), and that two opposed racks (20, 21) connected to two transmission rods (15, 16), are in turn connected to articulated joints (17) at the end of revolving rods (18) secured on the outside of the wheels (4, 5) so that both steering wheels can be steered in opposite directions at the same time and to the same extent by means of the steering wheel.

3. Automotive vehicle as described in claim 1, characterized by the fact that the L-shaped floating arm suspension (8) of the steering wheels has on one side eyelets (22) articulated onto the chassis or bearing frame (23) along a horizontal axis and is provided on the other end with holes (23) having vertical axis for articulated fastening onto the pin (9) of the support (31) of the revolving shaft (34) bearing the wheel (4, 5).

4. Automotive vehicle as described in Claim 1 characterized by the fact that the transmission mechanisms (27,28,29) and a universal joint (35) are transmitting the drive from the engine (10) to the driving shaft (34) bearing the steering wheel (4, 5), and by the fact that the revolving shaft (34) is extending beyond the wheel, the rotating rods (l8) being connected to the steering linkage (17) provided with ball bearings (40).

5. Automotive vehicle as described in claim 1 characterized by the fact that it can be reproduced on small scale but with the same functional characteristics, for model cars and toys.

**Revendications**

1. Véhicule à moteur à configuration en losange, dans lequel les roues (2, 3, 4, 5) sont disposées selon un losange, avec deux roues centrales (2, 3), une roue avant (4) et une roue arrière (5), et qui comporte un unique cadre ou châssis (1), des suspensions (8) des roues avant (4) et arrière (5) avec des bras flottants en forme de L, les roues avant (4) et arrière (5) pouvant être montées de manière à être orientables sur les suspensions (8) au moyen d'axes verticaux (9), caractérisé par la combinaison des dispositions suivantes :
   - l'unique cadre ou châssis (1) a la forme d'un losange parfait;
   - le moteur (10) est placé de manière que le centre de gravité du véhicule soit situé dans la partie centrale du châssis ;
   - toutes les roues (2, 3, 4, 5) sont des roues motrices, les suspensions des roues avant et arrière supportant des mécanismes de transmission (27, 28, 29) et un arbre moteur (34);
   - les suspensions (7) des roues centrales sont des suspensions trapézoïdales auto-réglables
   - les roues avant (4) et arrière (5) sont orientées au moyen de leviers (18) fixés auxdites roues avant et arrière, lesdits leviers (18) étant actionnés par un unique boîtier de direction (14) par l'intermédiaire de deux barres (15, 16).

2. Véhicule automobile selon la revendication 1, caractérisé par le fait que le boîtier de direction (14) comporte un pignon (19) entraîné par le volant (11) par l'intermédiaire de la colonne de direction (11) et d'une double articulation (13), et par le fait que deux crémaillères (20, 21) placées face à face reliées aux deux barres de transmission (15, 16) sont à leur tour reliées à des articulations (17) à l'extrémité de barres rotatives (18) montées à l'extérieur des roues (4, 5) si bien que les deux roues directrices peuvent être orientées dans des directions opposées en même temps et avec le même angle au moyen du volant.

3. Véhicule automobile selon la revendication 1, caractérisé par le fait que la suspension (8) à bras flottant en forme de L des roues directrices comporte d'un côté des oeillets (22) articulés sur le châssis ou cadre porteur (23) le long d'un axe horizontal et comporte à l'autre extrémité des orifices (23) qui reçoivent un axe veertical pour fixation articulée autour de l'axe (9) du support (31) de l'arbre rotatif (34) supportant la roue (4, 5).

4. Véhicule automobile selon la revendication 1, caractérisé par le fait que les mécanismes de transmission (27, 28, 29) et un joint de cardan (35) transmettent le mouvement du moteur (10) à l'arbre moteur (34) supportant le volant (4, 5), et par le fait que l'arbre rotatif (34) se prolonge au-delà de la roue, les barres rotatives (18) étant reliées à la tringlerie de direction (17) équipée de paliers à billes (40).

5. Véhicule automobile selon la revendication 1, caractérisé par le fait qu'il peut être reproduit à échelle réduite mais avec les mêmes caractéristiques fonctionnelles, pour construire des jouets et des voitures modèles.

**Ansprüche**

1. Kraftfahrzeug mit einer rhombischen Anordnung, bei dem die Räder (2,3,4,5) entsprechend einem Rhombus angeordnet sind, mit zwei mittleren Rädern (2, 3), einem vorderen Rad (4) und einem hinteren Rad (5), wobei ein einziger Rahmen (1) vorgesehen ist und das vordere (4) und das hintere (5) Rad mittels vertikaler Zapfen (9) an Aufhängungen (8) mit L-förmigen Schwingarmen befestigt sind, **gekennzeichnet** durch die Kombination folgender Maßnahmen:
- der einzige Rahmen (1) weist eine völlig rhombische Form auf, - die Maschine (10) ist derart angeordnet, daß der Schwerpunkt des Fahrzeuges im Mittelteil des Rahmens liegt;
- alle Räder (2, 3, 4, 5) sind angetrieben, wobei die Aufhängungen des vorderen und des hinteren Rades Übertragungsmechanismen (27, 28, 29) und eine Antriebswelle (34) tragen,
- die Aufhängungen (7) für die mittleren Räder sind als selbsteinstellende Trapezaufhängungen ausgebildet,
- das vordere (4) und hintere (5) Rad sind mittels Hebeln (18) lenkbar, die an den Rädern befestigt sind, wobei die Hebel (18) durch ein einziges Lenkgehäuse (14) mittels zwei Stangen (15, 16) betätigt sind.

2. Kraftfahrzeug nach Anspruch 1, **dadurch gekennzeichnet**, daß das Lenkgehäuse (14) ein vom Lenkrad (11) über die Lenksäule (12) und das Doppelgelenk (13) angetriebenes Ritzel (19) aufweist, und daß zwei mit zwei Übertragungsstangen (15, 16) verbundene gegenüberliegende Zahnstangen (20, 21) mit Gelenken (17) am Ende von drehbaren Stangen (18) verbunden sind, die an der Außenseite der Räder (4, 5) befestigt sind, sodaß beide gelenkten Räder zur gleichen Zeit und im selben Ausmaß mittels des Lenkrades in entgegengesetzte Richtungen gesteuert werden können.

3. Kraftfahrzeug nach Anspruch 1, **dadurch gekennzeichnet**, daß die L-förmige Aufhängung (8) der gelenkten Räder an einer Seite am Chassis oder dem Tragrahmen entlang einer horizontalen Achse angelenkte Augen (22) aufweist und am anderen Ende mit Bohrungen (23) mit einer vertikalen Achse versehen ist, die der gelenkigen Befestigung auf dein Zapfen (9) des Trägers (31 ) der das Rad (4, 5) tragenden Welle (34) dienen.

4. Kraftfahrzeug nach Anspruch 1, **dadurch gekennzeichnet**, daß ein Übertragungsmechanismus (27, 28, 29) und ein Kreuzgelenk (35) den Antrieb von deÐr Maschine (10) zu der das gelenkte Rad (4, 5) tragenden Antriebswelle (34) überträgt, und daß sich die Antriebswelle (34) über das Rad hinaus erstreckt, wobei die drehbaren Stangen (18) mit dem mit Kugellagern (40) versehenen Lenkgestänge (17) verbunden sind.

5. Kraftfahrzeug nach Anspruch 1, **dadurch gekennzeichnet**, daß es in kleinem Maßstab, aber mit den gleichen funktionellen Charakteristiken für Modellfahrzeuge und Spielzeuge reproduziert werden kann.

Fig 1

Fig. 2

Fig. 3

EP 0 254 974 B1

Fig. 5

Fig. 4

Fig. 6

EP 0 254 974 B1

Fig. 7

Fig. 8

EP 0 254 974 B1